Europäisches Patentamt

European Patent Office

Office européen des brevets

(11) Publication number: **0 233 700**
**A2**

## EUROPEAN PATENT APPLICATION

(21) Application number: **87300356.0**

(22) Date of filing: **16.01.87**

(51) Int. Cl.4: **B 29 C 63/02**
**B 29 C 63/16**

(30) Priority: **17.01.86 GB 8601166**

(43) Date of publication of application:
**26.08.87 Bulletin 87/35**

(84) Designated Contracting States:
**AT BE CH DE ES FR GR IT LI NL SE**

(71) Applicant: **Advanced Composite Components Limited**
**Delves Road Heanor Gate Industrial Estate**
**Heanor Derbyshire DE7 7SJ (GB)**

(72) Inventor: **Sloman, Roger Mark Advanced Composite**
**Comp. Ltd.**
**Delves Road Heanor Gate Industrial Estate**
**Heanor Derbyshire DE7 7SJ (GB)**

(74) Representative: **Campbell, Iain Angus et al**
**Swindell & Pearson 44 Friar Gate**
**Derby DE1 1DA (GB)**

(54) Moulding Fibre Reinforced Composite Armour.

(57) In an improved method of moulding fibre reinforced composite armour, a prepreg of fibre reinforcement preimpregnated with a resin and hardener is laid on an article to be armoured. The resin and hardener are capable of at least partial curing at a temperature below 80°C. The prepreg is cured at a temperature not greater than 80°C while applying pressure, to form an armour layer conforming to the surface of the article to be armoured. The use of the actual article as a mould for the prepreg ensures that the armour layer closely conforms to the article.

# 0 233 700

**Description**

## Moulding Fibre Reinforced Composite Armour

The present invention relates to a method of moulding fibre reinforced composite armour.

Our U.K. Patent No. GB 2108038B specifies a novel method of moulding preimpregnated fibre reinforced composites (prepreg), and details some areas of application of the method, including the production of components.

The method of the present invention is characterised by laying on an article to be armoured a prepreg of fibre reinforcement preimpregnated with resin and a hardener, the resin and hardener being capable of at least partial curing at a temperature below 80°C and curing the prepreg at a temperature not greater than 80°C while pressure is applied to the prepreg, thereby forming an armour layer conforming to the surface of the article to be armoured.

Preferably a plurality of layers of prepreg are laid directly on the surface to be armoured.

Preferably the prepreg is enclosed after laying up by covering it with an impermeable sheet sealed to the item to be armoured around its periphery and connected to means for reducing the pressure under the sheet.

Preferably suitable separator, bleeder and breather materials are fitted with the impermeable sheet.

Preferably pressure is applied to the laid up fibre during moulding, by way of the impermeable sheet by causing a pressure differential thereacross.

Preferably pressure is applied by the sheet during the application of heat.

Preferably heat of a temperature less than 80°C is applied to the prepreg to assist in curing. Preferably heat is applied by means of electrically heated blankets and/or radiation.

Preferably the fibre reinforced armour is bonded directly to the surface being armoured. Preferably the armour is bonded by the resin in the prepreg during the moulding/resin curing process. Alternatively, the armour may be bonded to the surface by additional adhesive/ resins which are cured either during or after the moulding/resin curing process.

Alternatively the moulded fibre reinforced armour is removed after moulding and re-applied using suitable adhesive and/or mechanical fastenings.

According to a further aspect of the present invention the method is characterised by applying liquid resin and a fibre reinforcement by conventional methods to the surface to be armoured.

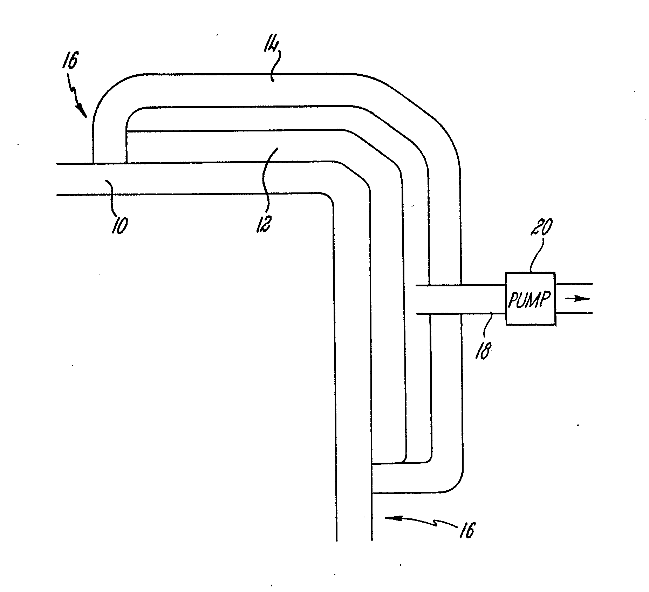

An example of the present invention will now be given by way of example only and with reference to the sole figure which is a section of a surface being armoured, shown while the method if being applied.

It is desired to supplement the armour on the exterior of the front section of a personnel carrier.

After suitably preparing the existing surface 10 of the cab to be armoured, for example by removing paint, rust and dirt therefrom, one or more layers 12 of prepreg of fibre reinforcement, for example glass fibres, preimpregnated with resin and a hardener are laid over the surface. The resin formulation may be as follows:-

|  | Parts by Weight |
|---|---|
| Ciba Geigy Resin TM Araldite LY 558 | 80 |
| Shell Chemicals Resin TM Epikote 834 | 20 |
| Anchor Chemicals Hardener TM Anchor 1171 | 7 |

The fibrous material may be any suitable form of glass, nylon Aramid fibre or any other fibrous material with the required ballistic protection properties.

An impervious sheet 14, for example a plastics material sheet, is laid over the prepreg layers and sealed around the periphery 16 of the layers to the area to be armoured by an appropriate removable sealant. Suitable separator, bleeder and breather materials (not shown) are utilised as is conventional practice in the advanced composites industry and an exhaust pipe 18 is fitted in an aperture in the sheet, the pipe being connected to a vacuum pump 20. Air is evacuated from the space between the impermeable sheet 14 and the surface 10 being armoured until the pressure differential across the impermeable sheet 14 applies the desired pressure to the prepreg layers 12. Curing initiation circumstances are then applied to the prepreg, for example the application of heat below 80°C from an electric blanket, and the situation is maintained until the prepreg 12 has fully cured at which stage heat and pressure are removed. The impermeable sheet 14 and its peripheral sealing is removed thereby allowing the armour layer which has been moulded to the exact configuration of the area to be covered to be permanently fitted to the area either by means of adhesive or by mechanical fixing means.

2

In a modified method an adhesive layer can be laid down prior to the laying down of the first prepreg layer such that during the curing process the additional armour layer is permanently fixed to the surface to be armoured.

Existing vehicles or items may be armoured to resist a particular threat, but then may need to be further protected as a result of an increased level of threat, or as a matter of policy. Alternatively it may be decided to provide armour on an item which was previously unprotected.

In these cases there is a choice of method which could be used to provide the increased level of protection, such as removal of the old armour, and replacement by a heavier/better grade, or by simply adding armour to the structure.

The special nature of the prepreg formulations of the types disclosed in GB 2108038B is that they have a long storage life at reduced temperature (e.g. -18°C) combined with the ability to cure (harden) the resin rapidly at temperatures ranging from ambient to 80°C and achieve a high level of temperature resistance, a combination previously unknown. This combination of properties allows the technical and handling advantages of prepreg to be extended to circumstances where only low initial curing temperatures are possible or desirable and good high temperature resistance is also required in service.

Such circumstances may well exist when it is desired to add armour to an existing structure, which may be difficult to heat to normal prepreg curing temperatures (<100°C) or may be damaged by such temperatures. Additionally thermal expansion effects may cause problems with distortion or bonding where materials of dissimilar thermal expansion coefficient are used together.

The method may be used to armour an unprotected existing structure. or be used to provide original armour in a design by an in-situ moulding technique, using other existing parts of the structures as the mould. This saves the potentially high cost of providing a separate mould, which may be uneconomical for a small production run, or prototype/development items where the design is not finalised.

Somewhat similar results can be achieved by the use of the conventional wet-layup technique, where liquid resin and the fibrous reinforcement are combined in the mould (or, as in the current case, on the surface to be armoured).

The method disclosed is also advantageous in some circumstances compared to using premoulded hard armour. Normally this is produced in flat sheets, or in a mould which is the same shape or fit as the surface or area to which the armour is to be applied.

In the case of flat sheets, these are difficult to apply to anything other than flat surfaces, and premoulded components may not always fit the surface to which they are to be applied due to manufacturing variability in either the surface or the moulded article, or changes of shape in the surface due to in-service damage, distortion or modification.

Thus the surface which it may be desired to armour may vary from one structure to the next, and this may make difficult or preclude the use of a premoulded component. It may be possible to use flat sheets, but this may be undesirable due to the shape of the surface involved, or weakness at joints between adjacent sheets etc.

In such cases the new method will automatically provide individually tailored armour for every item and structure whatever the difference in shape between nominally identical specimens and there are no joints involved.

The principle can also be extended to armour shaped for individual people, by making low-cost moulds from the individual, and moulding the armour by the above described process in the moulds.

If desired, layers of different materials may be added to provide specific characteristics such as flexible interlayers, bonding/adhesion promoters, radiation barriers etc.

The method may also be used to embed materials such as ceramics into the armour material.

## Claims

1. A method of moulding fibre reinforced composite armour characterised by laying on an article to be armoured a prepreg of fibre reinforcement preimpregnated with resin and a hardener, the resin and hardener being capable of at least partial curing at a temperature below 80°C, and curing the prepreg at a temperature not greater than 80°C while pressure is applied to the prepreg, thereby forming an armour layer conforming to the surface of the article to be armoured.

2. A method according to claim 1, further characterised in that a plurality of layers of prepreg are laid directly on the surface to be armoured.

3. Method according to claims 1 or 2, further characterised by enclosing the prepreg after laying up by covering it with an impermeable sheet sealed around its periphery to the item to be armoured and connected to means for reducing the pressure under the sheet.

4. Method according to claim 3, further characterised in that suitable separator, bleeder and breather materials are fitted with the impermeable sheet.

5. Method according to claims 3 or 4, further characterised in that pressure is applied to the laid up fibre during moulding, by way of the impermeable sheet by causing a pressure differential thereacross.

6. Method according to claim 5, further characterised in that pressure is applied by the sheet during the

3

application of heat.

7. Method according to any preceding claim, further characterised in that heat of a temperature less than 80°C is applied to the prepreg to assist in curing.

8. Method according to claim 7, further characterised in that heat is applied by means of an electrically heated blanket and/or radiation.

9. Method according to any preceding claim, further characterised in that the fibre reinforced armour is bonded directly to the surface being armoured.

10. Method according to claim 9, further characterised in that the armour is bonded by the resin in the prepreg during the moulding/resin curing process.

11. A method according to claim 9, further characterised in that the armour is bonded to the surface by additional adhesive/ resins which are cured either during or after the moulding/ resin curing process.

12. Method according to any of claims 1 to 8, further characterised in that the moulded fibre reinforced armour is removed after moulding and is re-applied to the article using adhesive and/or mechanical fastenings.

13. A method of providing a fibre reinforced armour layer characterised by applying liquid resin and a fibre reinforcement directly to the surface to be armoured, and curing by a conventional method.

0233700